# EUROPEAN PATENT APPLICATION

(11) **EP 3 469 939 A1**
(43) Date of publication of application: **17.04.2019**
(21) Application number: 17306390.0
(22) Date of filing: 13.10.2017
(51) Int. Cl.: A41D 13/11

(54) **RECUT POLYOLEFIN FOAM AS A DISPOSABLE MASK SEAL**

(71) Applicant: Honeywell International Inc., Morris Plains, NJ 07950 (US)
(72) Inventor: TREBOUTA, Christelle, Morris Plains, New Jersey 07950 (US)
(74) Representative: Gendron, Vincent Christian

(57) **Abstract**

Embodiments relate generally to systems, devices, and methods for utilizing re-cut polyolefin foam (100) in seals for respiratory masks (112). A method for constructing a respiratory mask (112) includes splitting polyolefin foam to provide a re-cut polyolefin foam (100), wherein the re-cut polyolefin foam (100) comprises a first surface (102) comprising wrinkles (104) and a second surface (106) that is substantially free of wrinkles, wherein the first surface (102) is opposite to the second surface (106); and attaching the first surface (102) to an interior portion (111) of a respiratory mask (112), wherein the interior portion (111) is a seal portion of the respiratory mask (112).

## Description

### BACKGROUND

The use of respiratory masks is a recommended practice in certain work environments to assist in preventing inhalation of particles, such as, for example, dust, chemicals, and microorganisms, which may be present in ambient air. Respiratory masks may include several filtering and sealing options, depending on applications of the masks. Certain respiratory masks may be configured to cover the nose and mouth of a user.

### SUMMARY

In an embodiment, a method for constructing a respiratory mask may comprise splitting/cutting polyolefin foam to provide a re-cut polyolefin foam, wherein the re-cut polyolefin foam comprises a first surface made of closed cells comprising wrinkles and a second surface having an open-cell structure that is substantially free of wrinkles, wherein the first surface is opposite to the second surface; and attaching the first surface to an interior portion of a respiratory mask, wherein the interior portion is a seal portion of the respiratory mask.

In an embodiment, a respiratory mask may comprise a re-cut polyolefin foam comprising a first surface comprising wrinkles and a second surface that is substantially free of wrinkles, wherein the first surface is opposite to the second surface; wherein the re-cut polyolefin foam is positioned on a seal portion of the respiratory mask.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 illustrates polyolefin foam that has not been re-cut, in accordance with embodiments of the disclosure.
FIG. 2 illustrates polyolefin foam that has been re-cut into a thinner portion, in accordance with embodiments of the disclosure.
FIG. 3 illustrates polyolefin foam that has been partially cut and unfolded, in accordance with embodiments of the disclosure.
FIG. 4 illustrates the overall fit factor of respiratory masks with a re-cut polyolefin foam seal compared to masks without a re-cut polyolefin foam seal, in accordance with embodiments of the disclosure.
FIG. 5 illustrates an exemplary face seal for a respiratory mask, in accordance with embodiments of the disclosure.
FIG. 6 illustrates another exemplary face seal for a respiratory mask in accordance with embodiments of the disclosure.
FIG. 7 illustrates an exemplary nose seal in accordance with embodiments of the disclosure.
FIG. 8 illustrates another exemplary nose seal in accordance with embodiments of the disclosure.
FIGS. 9 and 10 illustrate another exemplary nose seal in accordance with embodiments of the disclosure.
FIG. 11 illustrates another exemplary nose seal in accordance with embodiments of the disclosure.
FIG. 12 illustrates another exemplary respiratory mask for use with seals of the disclosure.
FIG. 13 illustrates an exemplary process for cutting/splitting polyolefin foam in the axis of the roll length direction in accordance with embodiments of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The following brief definition of terms shall apply throughout the application:

The term "comprising" means including but not limited to, and should be interpreted in the manner it is typically used in the patent context;

The phrases "in one embodiment," "according to one embodiment," and the like generally mean that the particular feature, structure, or characteristic following the phrase may be included in at least one embodiment of the present invention, and may be included in more than one embodiment of the present invention (importantly, such phrases do not necessarily refer to the same embodiment);

If the specification describes something as "exemplary" or an "example," it should be understood that refers to a non-exclusive example;

The terms "about" or "approximately" or the like, when used with a number, may mean that specific number, or alternatively, a range in proximity to the specific number, as understood by persons of skill in the art field; and

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

Embodiments of the disclosure may include polyethylene ("PE") soft foam utilized as a seal (e.g., a face seal, a nose seal, and/or a mouth seal) for a respiratory mask. This PE foam (e.g., Alveosoft® foam), for example, may be manufactured by Sekisui Alveo under the patent EP 1647384. The PE foam may be a physically crosslinked polyolefin foam (e.g., via electron irradiation). The PE foam may include high compressibility and shape recovery, combined with excellent durability. The PE foam has a partly open-cell structure and is more than ten times softer than well-known closed-cell polyolefin foams and comes closer to the range of soft polyvinyl chloride ("PVC"), polyurethane ("PU"), and ethylene propylene diene monomer ("EPDM") foams. The PE foam may be water repellant and does not include heavy metals, plasticizers, chlorofluorocarbons ("CFCs"), and hydrochlorofluorocarbons ("HCFCs"). The PE foam may have a thermal conductivity of about 10°C.

The PE foam provides a better fit to a user when incorporated into a seal (e.g., a face seal, a nose seal, and/or a mouth seal) of a respiratory mask (e.g., a disposable mask) as compared to PU foam and/or polyester seals or complex of Polyester textile, PU foam and PE film. The PE foam provided/initially by manufacturer may include an initial thickness ranging from about 2 mm to about 12 mm. The PE foam may be mechanically cut/split (e.g., by a razor/blade) in the roll length direction into thinner pieces. For example, without limitation, the PE foam may be cut into halves, thirds, quarters, fifths, sixths, sevenths, eighths, ninths, tenths, or any suitable portion. For example, PE foam with a 6 mm thickness may be cut into halves, each half having a thickness of 3 mm.

When provided by the manufacturer, the PE foam may include wrinkles on the exterior surfaces due to the specific combined compression and shearing process of manufacturing. Cells of the PE foam are closed on these surfaces, thereby forming a "skin" aspect with wrinkles and bringing an airtightness property. However, where re-cut, the PE foam exposes a smooth interior surface (i.e., the PE foam includes an inner ruptured cell structure, i.e. the cells are essentially opened) that is substantially free of wrinkles (e.g., entirely free of wrinkles) that bring different advantages. The re-cut side has improved mechanical properties (e.g., improved tearing resistance). For example, the PE foam provided by the manufacturer (which has not been re-cut) is very fragile and tearing of seals (e.g., nose seals) during manipulation of masks has been observed. The re-cut side/surface has open cells, thereby allowing improved ultrasonic welding, softness, sweat absorption and a better quality perception.

Foams having open cells (e.g., short term gas exchange between the cells, also called breathable foams) differ from closed cell foams (no short term gas exchange, non-breathable foams) due to the compression strength of each type of foam. A low compression strength value of open-cell foams is associated with softer touch or grip. Additionally, a complete gas exchange is possible between the open cells, and there is increased elasticity and softness due to the low compression strength. The low compression strength of open-cell foams allows improved recovery of the foam after having been compressed. Such properties are particularly desired, for example in sealing applications.

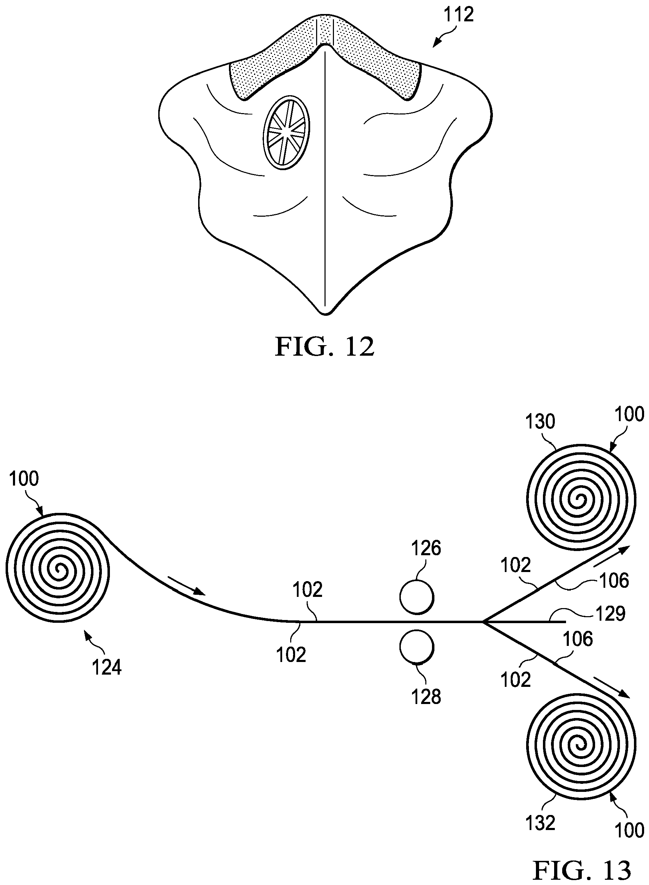

The PE foam (e.g., crushed open-cell foam) initially provided by the foam manufacturer of the present disclosure has an extremely soft grip and very low compression strength without being permeable to air and water due to the intact skin on its top and bottom surfaces. The PE foam can advantageously be used as comfort material or cushioning material, and is highly effective as a sealing material. An exemplary process for splitting/cutting the PE foam is depicted in FIG. 13. By cutting/splitting the PE foam in the roll length direction for sealing applications, a benefit of impermeability to air with one side, and a benefit of comfort and softness for contact with the face with the other side, is maintained.

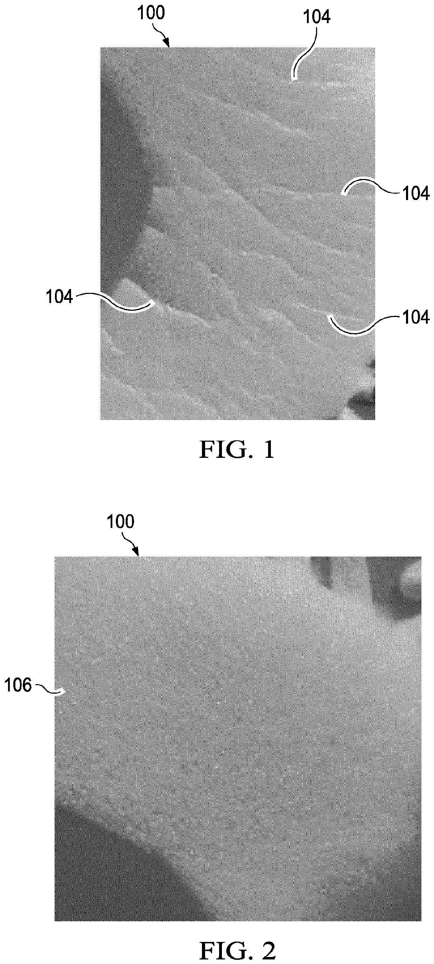

FIG. 1 is a schematic illustration of PE foam 100 that has not been re-cut (e.g., initial PE foam provided/cut by the manufacturer). As shown, exterior surface 102 includes wrinkles 104.

FIG. 2 is a schematic illustration of PE foam 100 that has been re-cut into a thinner portion. As shown, re-cut side/surface 106 is substantially free of wrinkles. When re-cut, surface 102 is opposite to re-cut surface 106.

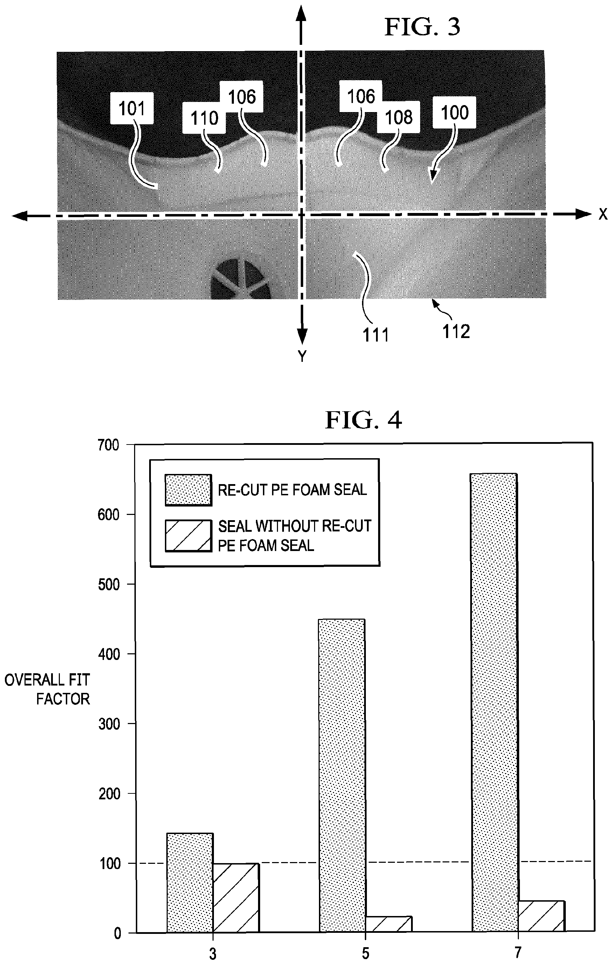

In certain embodiments, PE foam 100 may be partially cut and unfolded into, for example, a strip 101 for use as a seal, as shown in FIG. 3. As shown, PE foam 100 may be cut (e.g., partial cut) and unfolded into symmetrical (e.g., relative to y axis) portions 108 and 110. Re-cut surfaces 106 are substantially wrinkle-free, as shown. The exterior surface (e.g., exterior surface 102 shown on FIG. 1) containing the wrinkles (e.g., wrinkles 104, shown on FIG. 1) may be welded (e.g., ultrasonic welding) to an interior portion 111 (e.g., interior portion 111 is a seal portion which may include a nose seal, face seal, and/or mouth seal) of mask 112, thereby exposing re-cut surface 106 to a user of mask 112 (i.e., re-cut surface 106 contacts the face of a user).

FIG. 4 illustrates the overall fit factor of respiratory masks (e.g., 2000 series disposable masks from Honeywell) with a re-cut PE foam seal (3 mm thickness) compared to same masks with a nose seal made of Polyester textile, PU foam and PE film complex. The overall fit factor is determined by measuring (e.g., PortaCount® testing) the concentration of microscopic dust particles in the ambient air and then measuring the concentration of those dust particles that leak into the respiratory mask via the seal (e.g., face seal, nose seal, and/or mouth seal). The ratio of these two concentrations is called the overall fit factor. As shown, wearers 3, 5, and 7 have substantial fit improvement with the re-cut PE seal when compared to a non-re-cut PE seal (e.g., Polyester/PU foam/PE film seal as shown). The numbers 3, 5, and 7 represent the different shapes and sizes of users' faces. The dashed line at the overall fit factor of 100 is the minimum overall fit factor standard that is acceptable for FFP3 class of efficiency. As shown, the overall fit factor for the re-cut PE seals exceed the minimum overall fit factor of 100, whereas, the non-re-cut PE seals do not.

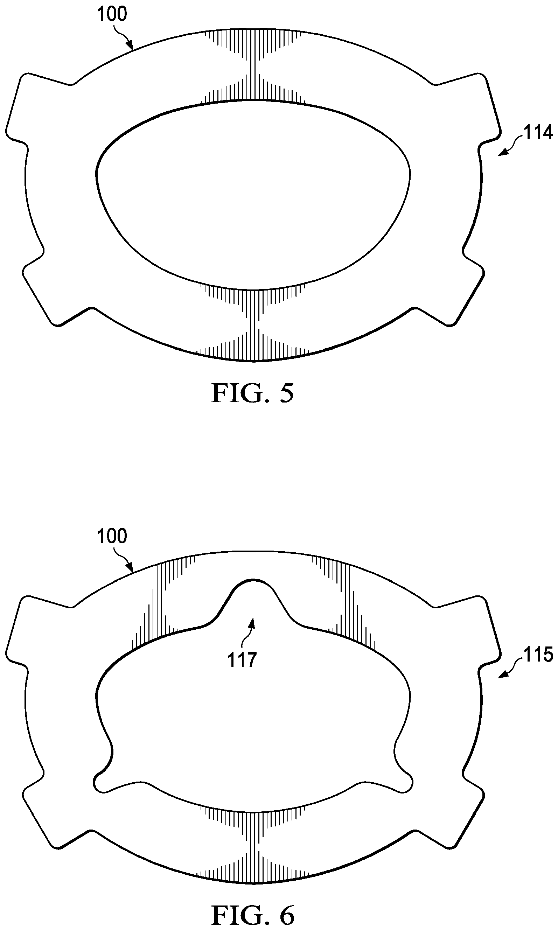

FIG. 5 illustrates face seal 114 (face seal 114 may cover the nose and mouth of a user) for a respiratory mask (e.g., mask 112 shown on FIGS. 3 and 12). Face seal 114 may include PE foam 100 that has been re-cut. The substantially wrinkle-free surface of face seal 114 may be exposed to the user (e.g., re-cut surface 106 shown on FIG. 2), whereas the exterior surface with the wrinkles (e.g., exterior surface 102 with wrinkles 104 shown on FIG.1) may be welded (e.g., ultrasonic welding) to a respiratory mask (e.g., mask 112 shown on FIG. 3). The area of the respiratory mask covered with PE foam 100 (for use as a seal, as shown) may range from about 7700 mm² to about 7900 mm² (e.g., 7835.52 mm²) for a "small" size; about 8800 mm² to about 9000 mm² (e.g., about 8901.77 mm²) for a "medium/large" size; and about 9600 mm² to about 9800 mm² (e.g., about 9712.52 mm²) for an "extra-large" size. The sizes are based on the shape and/or size of a user's face.

FIG. 6 illustrates another embodiment of a face seal (e.g., face seal 115) for a respiratory mask. Face seal 115 may include a cut out portion 117 for the nose of a user. Face seal 115 may include PE foam 100 that has been re-cut. The substantially wrinkle-free surface of face seal 115 may be exposed to the user (e.g., re-cut surface 106 shown on FIG. 2), whereas the exterior surface with the wrinkles (e.g., exterior surface 102 with wrinkles 104 shown on FIG.1) may be welded (e.g., ultrasonic welding) to a respiratory mask (e.g., mask 112 shown on FIGS. 3 and 12). The area of the respiratory mask covered with PE foam 100 (for use as a seal, as shown) may range from about 7700 mm² to about 7900 mm² (e.g., 7861.25 mm²) for a "small" size; about 8000 mm² to about 8200 mm² (e.g., about 8107.39 mm²) for a "medium/large" size; and about 8100 mm² to about 8400 mm² (e.g., about 8276.55 mm²) for an "extra-large" size.

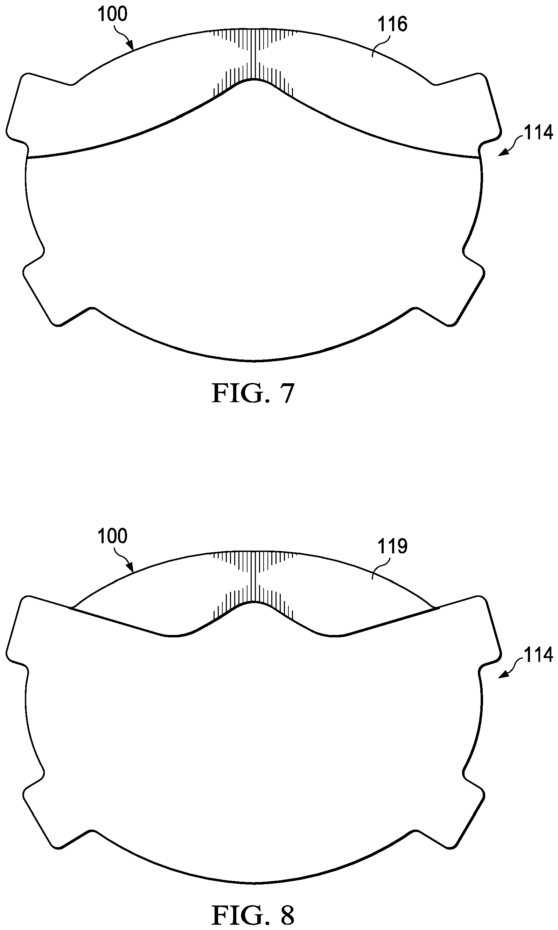

FIG. 7 illustrates a nose seal 116 (e.g., Honeywell Softech™) of a face seal (e.g., face seal 114 or face seal 115). Nose seal 116 may be a portion of a face seal that covers the nose of a user. The area of the respiratory mask (e.g., mask 112 shown on FIGS. 3 and 12) covered with PE foam 100 (for use as a seal, as shown) may range from about 3100 mm² to about 3500 mm² (e.g., 3347.59 mm²) for a "small" size; about 3600 mm² (e.g., 3832 mm²) to about 4000 mm² for a "medium/large" size; and about 4100 mm² to about 4300 mm² (e.g., 4185.73 mm²) for an "extra-large" size.

FIG. 8 illustrates another embodiment of a nose seal (e.g., nose seal 119) of a face seal (e.g., face seal 114 or face seal 115). Nose seal 119 (e.g., Honeywell Softech™) may be a portion of a face seal that covers the nose of a user. The area of the respiratory mask (e.g., mask 112 shown on FIGS. 3 and 12) covered with PE foam 100 (for use as a seal, as shown) may range from about 2100 mm² to about 2400 mm² (e.g., 2281.53 mm²) for a "medium/large" size; and about 2500 mm² to about 2800 mm² (e.g., 2610.02 mm²) for an "extra-large" size.

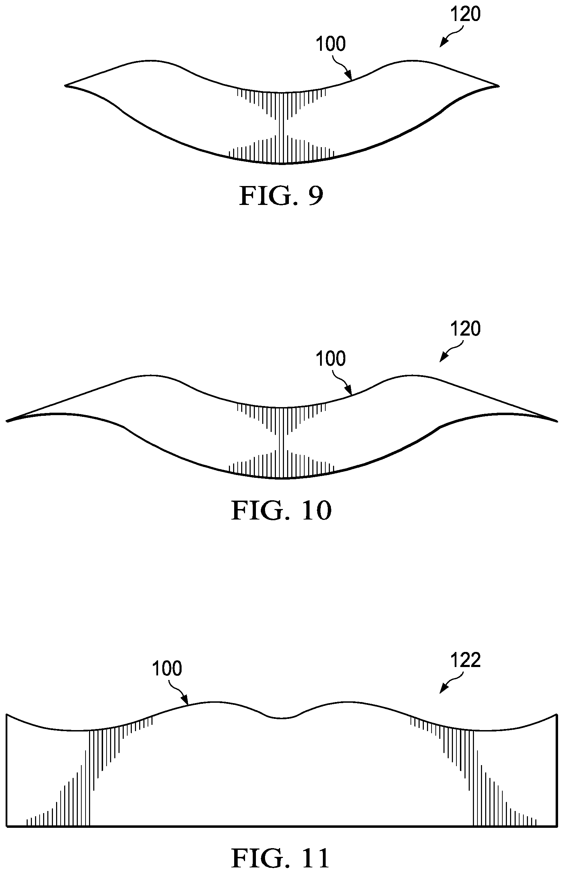

FIG. 9 illustrates another embodiment of a nose seal (e.g., nose seal 120) of a face seal (e.g., face seal 114 or face seal 115). Nose seal 120 (e.g., Honeywell Softech™) may be a portion of a face seal that covers the nose of a user. The area of the respiratory mask (e.g., mask 112 shown on FIGS. 3 and 12) covered with PE foam 100 (for use as a seal, as shown) may range from about 2100 mm² to about 2200 mm² (e.g., 2111.8 mm²) for a "small/medium/large" size; and about 2201 mm² to about 2300 mm² (e.g., 2234 mm²) for an "extra-large" size (shown on FIG. 10).

FIG. 11 illustrates another embodiment of a nose seal (e.g., nose seal 122) of a face seal (e.g., face seal 114 or face seal 115). Nose seal 122 (e.g., Honeywell Softech™) may be a portion of a face seal that covers the nose of a user. The area of the respiratory mask (e.g., mask 112 shown on FIGS. 3 and 12) covered with PE foam 100 (for use as a seal, as shown) may range from about 1900 mm² to about 2100 mm² (e.g., 1927.18 mm²) for a "one size fits all" size.

FIG. 12 illustrates another view (exterior view) of mask 112. It should be noted that systems, methods, and devices of the present disclosure can be implemented (e.g., formed, shaped) with any suitable respiratory mask, not just the exemplary masks depicted and described within this disclosure.

As noted above, FIG. 13 illustrates an exemplary splitting technique for PE foam 100. Spool 124 may include PE foam 100 (i.e., PE foam 100 may be provided as a roll to be positioned on a spool). As shown, PE foam 100, before being re-cut, includes wrinkled exterior surfaces (e.g., surfaces 102) on both of its sides/surfaces. PE foam 100 may be directed (e.g., unrolled from spool 124) through rolls 126, 128 for calendering. After calendering, PE foam 100 may be directed to a sharp blade 129 for splitting/cutting. Once split/cut, the re-cut PE foam 100 includes wrinkled surface (e.g., surface 102 on one side, as shown) and a substantially wrinkle-free surface (e.g., re-cut surface 106 on the other side, as shown). The re-cut PE foam 100 may be directed to spools 130, 132 (e.g., recovery spools), where it is wound into rolls of re-cut PE foam 100, where each roll of re-cut PE foam 100 includes surface 102 (wrinkles) and re-cut surface 106 (substantially wrinkle-free).

Having described various systems and methods, various embodiments can include, but are not limited to:

In a first embodiment, a method for constructing a respiratory mask may comprise splitting polyolefin foam to provide a re-cut polyolefin foam, wherein the re-cut polyolefin foam comprises a first surface comprising a closed cells structure with wrinkles and a second surface comprising an opened cells structure that is substantially free of wrinkles, wherein the first surface is opposite to the second surface; and attaching the first surface to an interior portion of a respiratory mask, wherein the interior portion is a seal portion of the respiratory mask.

A second embodiment may include the method of the first embodiment, wherein attaching the first surface to an interior portion of a respiratory mask comprises ultrasonic welding.

A third embodiment may include the method of the first or second embodiments, further comprising exposing the second surface.

A fourth embodiment may include the method of any of the preceding embodiments, further comprising forming a nose seal with the re-cut polyolefin foam on the seal portion of the respiratory mask.

A fifth embodiment may include the method of any of the preceding embodiments, further comprising forming a face seal with the re-cut polyolefin foam on the seal portion of the respiratory mask.

A sixth embodiment may include the method of any of the preceding embodiments, further comprising partially cutting the polyolefin foam.

A seventh embodiment may include the method of any of the preceding embodiments, further comprising folding the re-cut polyolefin foam to provide symmetrical portions.

An eighth embodiment may include the method of any of the preceding embodiments, further comprising unrolling a spool of the polyolefin foam and directing the polyolefin foam to a blade for the splitting.

A ninth embodiment may include the method of any of the preceding embodiments, further comprising winding the re-cut polyolefin foam onto recovery spools.

In a tenth embodiment, a respiratory mask may comprise a re-cut polyolefin foam comprising a first surface comprising wrinkles and a second surface that is substantially free of wrinkles, wherein the first surface is opposite to the second surface; wherein the re-cut polyolefin foam is positioned on a seal portion of the respiratory mask.

An eleventh embodiment may include the respiratory mask of the tenth embodiment, wherein the first surface comprises closed cells.

A twelfth embodiment may include the respiratory mask of the tenth or eleventh embodiments, wherein the second surface comprises open cells.

A thirteenth embodiment may include the respiratory mask of any one of the tenth through twelfth embodiments, wherein the seal portion comprises a nose seal.

A fourteenth embodiment may include the respiratory mask of any one of the tenth through thirteenth embodiments, wherein the seal portion comprises a face seal.

A fifteenth embodiment may include the respiratory mask of any one of the tenth through fourteenth embodiments, wherein an overall fit factor of the re-cut polyolefin foam is between 100 and 700.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present invention(s). Furthermore, any advantages and features described above may relate to specific embodiments, but shall not limit the application of such issued claims to processes and structures accomplishing any or all of the above advantages or having any or all of the above features.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure. Specifically and by way of example, although the headings might refer to a "Field," the claims should not be limited by the language chosen under this heading to describe the so-called field. Further, a description of a technology in the "Background" is not to be construed as an admission that certain technology is prior art to any invention(s) in this disclosure. Neither is the "Summary" to be considered as a limiting characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of the claims shall be considered on their own merits in light of this disclosure, but should not be constrained by the headings set forth herein.

Use of broader terms such as "comprises," "includes," and "having" should be understood to provide support for narrower terms such as "consisting of," "consisting essentially of," and "comprised substantially of." Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for constructing a respiratory mask (112), the method comprising:
splitting polyolefin foam (100) to provide a re-cut polyolefin foam (100), wherein the re-cut polyolefin foam comprises a first surface (102) comprising a closed cells structure with wrinkles (104) and a second surface (106) comprising an opened cells structure that is substantially free of wrinkles, wherein the first surface (102) is opposite to the second surface (106); and
attaching the first surface to an interior portion (111) of a respiratory mask (112), wherein the interior portion (111) is a seal portion of the respiratory mask (112).

2. The method of claim 1, wherein attaching the first surface to an interior portion (111) of a respiratory mask (112) comprises ultrasonic welding.

3. The method of claim 2, further comprising exposing the second surface (106).

4. The method of claim 3, further comprising forming a nose seal (116) with the re-cut polyolefin foam (100) on the interior portion (111) of the respiratory mask (112).

5. The method of claim 4, further comprising forming a face seal (115) with the re-cut polyolefin foam on the interior portion (111) of the respiratory mask (112).

6. The method of claim 1, further comprising partially cutting the polyolefin foam (100).

7. The method of claim 6, further comprising folding the re-cut polyolefin foam (100) to provide symmetrical portions (108, 110).

8. The method of claim 1, further comprising unrolling a spool (124) of polyolefin foam (100) and directing the polyolefin foam (100) to a blade for the splitting.

9. The method of claim 8, further comprising winding the re-cut polyolefin foam (100) onto recovery spools (130, 132).

10. A respiratory mask (112) comprising:
a re-cut polyolefin foam (100) comprising a first surface (102) comprising wrinkles (104) and a second surface (106) that is substantially free of wrinkles, wherein the first surface (102) is opposite to the second surface (106);
wherein the re-cut polyolefin foam (100) is positioned on an interior portion (111) of the respiratory mask (112).

11. The respiratory mask of claim 10, wherein the first surface (102) comprises closed cells.

12. The respiratory mask of claim 11, wherein the second surface (106) comprises open cells.

13. The respiratory mask of claim 10, wherein the interior portion (111) comprises a nose seal (116).

14. The respiratory mask of claim 10, wherein the interior portion (111) comprises a face seal (114).

15. The respiratory mask of claim 10, wherein an overall fit factor of the re-cut polyolefin foam (100) is between 100 and 700.
